# EUROPEAN PATENT SPECIFICATION

(11) **EP 2 923 876 B1**
(45) Date of publication and mention of the grant of the patent: **16.10.2019**
(21) Application number: 12888833.6
(22) Date of filing: 26.11.2012
(51) Int. Cl.: B60K 35/00, G02F 1/133, G09G 5/00

(54) **DISPLAY DEVICE, CONTROL METHOD, PROGRAM, AND STORAGE MEDIUM**
ANZEIGEVORRICHTUNG, STEUERUNGSVERFAHREN, PROGRAMM UND SPEICHERMEDIUM
DISPOSITIF D'AFFICHAGE, PROCÉDÉ DE COMMANDE, PROGRAMME ET SUPPORT DE STOCKAGE

(43) Date of publication of application: 30.09.2015
(73) Proprietor: Pioneer Corporation, Tokyo 113-0021 (JP)
(72) Inventor: FUJIE, Tetsuya, Kawagoe-shi Saitama 350-8555 (JP)
(74) Representative: Viering, Jentschura & Partner mbB Patent- und Rechtsanwälte
(86) International application number: PCT/JP2012/080485
(87) International publication number: WO 2014/080521

(56) References cited:
- EP-A1- 1 491 978
- EP-A2- 1 024 057
- WO-A1-2007/034593
- WO-A1-2011/093560
- DE-A1-102010 023 195
- JP-A- H 063 648
- JP-A- S6 459 329
- JP-A- H03 296 714
- JP-A- H03 296 714
- JP-A- H05 139 187
- JP-A- H06 255 396
- JP-A- H06 308 907
- JP-A- 2005 207 782
- JP-A- 2009 093 343

## Description

### TECHNICAL FIELD

The present invention relates to a technology for determining whether or not to display information based on temperature.

### BACKGROUND TECHNIQUE

Conventionally, there is known a display device which stops its display if the temperature becomes such a temperature that the display device cannot work normally. For example, Patent Reference-1 discloses such a liquid crystal display device equipped with a liquid crystal panel that displays information indicating abnormal temperature and stops the energization to protect the liquid crystal panel from high temperature if the microcomputer thereof detects an abnormal temperature.

Patent Reference-1: Japanese Patent Application Laid-open under No. H6-3648. JP H03 296714 (A) discloses a display unit that displays information depending on the temperature of the display unit.

### DISCLOSURE OF INVENTION

### PROBLEM TO BE SOLVED BY THE INVENTION

Generally, the inside temperature of a moving body left for a time greatly depends on environment at that time. For example, under the hot sun in the summer, the inside temperature of the moving body becomes dramatically high whereas the temperature becomes dramatically low in a frigid climate in the winter. In such a case that the inside temperature is extreme, the temperature of parts of a display device inside the moving body could be out of range that they work normally. In this case, the technique according to Patent Reference-1 may be applied in such a way that it temporally stops the display until the temperature of the parts of the display device is within the range that they work normally and turns on the display when the temperature of the parts of the display device becomes within the range along with the moderation of the inside temperature of the moving body thanks to the air conditioning. However, in this case, the driver's attention could be distracted due to the sudden start of the display during a movement of the moving body, which is inappropriate for safety.

The above is an example of the problem to be solved by the present invention. An object of the present invention is to provide a display device capable of safely switching display on and off in accordance with the variation of the temperature.

### MEANS FOR SOLVING THE PROBLEM

One invention is a display device moving together with a moving body including: a display unit configured to display an image; an information acquisition unit configured to acquire information on driving of the moving body and/or information on a nearby obstacle; and a display control unit configured to turn off display of the display unit if temperature around or inside the display unit deviates from an allowable operation range, wherein when the temperature shifts from out of the allowable operation range to an allowable return range, the display control unit turns on the display of the display unit depending on the information on the driving of the moving body and/or the information on the nearby obstacle acquired by the information acquisition unit.

Another invention is a control method executed by a display device moving together with a moving body and including a display unit configured to display an image, including: an information acquisition process to acquire information on driving of the moving body and/or information on a nearby obstacle; and a display control process to turn off display of the display unit if temperature around or inside the display unit deviates from an allowable operation range, wherein when the temperature shifts from out of the allowable operation range to an allowable return range, the display control process turns on the display of the display unit depending on the information on the driving of the moving body and/or the information on the nearby obstacle acquired by the information acquisition process.

Still another invention is a program executed by a display device moving together with a moving body and including a display unit configured to display an image, making the display device function as : an information acquisition unit configured to acquire information on driving of the moving body and/or information on a nearby obstacle; and a display control unit configured to turn off display of the display unit if temperature around or inside the display unit deviates from an allowable operation range, wherein when the temperature shifts from out of the allowable operation range to an allowable return range, the display control unit turns on the display of the display unit depending on the information on the driving of the moving body and/or the information on the nearby obstacle acquired by the information acquisition unit.

### BRIEF DESCRIPTION OF THE DRAWINGS

FIG. 1 illustrates an example of the configuration of a display system according to an embodiment.
FIG. 2 illustrates the schematic configuration of a navigation device.
FIG. 3 illustrates the schematic configuration of a head-up display.
FIG. 4 illustrates the schematic configuration of a light source unit.
FIG. 5 is a flowchart for switching display on and off according to the embodiment.

### DETAILED DESCRIPTION OF THE PREFERRED EMBODIMENTS

According to a preferable embodiment of the present invention, there is provided a display device moving together with a moving body including: a display unit configured to display an image; an information acquisition unit configured to acquire information on driving of the moving body and/or information on a nearby obstacle; and a display control unit configured to turn off display of the display unit if temperature around or inside the display unit deviates from an allowable operation range, wherein when the temperature shifts from out of the allowable operation range to an allowable return range, the display control unit turns on the display of the display unit depending on the information on the driving of the moving body and/or the information on the nearby obstacle acquired by the information acquisition unit.

The above display device moves together with a moving body and includes a display unit, an information acquisition unit and a display control unit. The information acquisition unit is configured to acquire information on driving of the moving body and/or information on a nearby obstacle. The display control unit is configured to turn off display of the display unit if temperature around or inside the display unit deviates from an allowable operation range. Then, when the temperature shifts from out of the allowable operation range to an allowable return range, the display control unit turns on the display of the display unit depending on the information on the driving of the moving body and/or the information on the nearby obstacle. According to this mode, the display device turns on the display depending on the information on the driving of the moving body and/or the information on the nearby obstacle. Thus, display device can turn on the display at a safe timing on the assumption that turning on the display could distract the driver's attention.

In one mode of the display device, the display unit displays the image over scenery seen in front of the moving body. In such a case that the image is displayed over scenery seen in front of the moving body, the driver's attention could be distracted because of the sudden appearance of the image in the sight of the driver due to turning on the display. Even in this case, on the assumption that turning on the display could distract the driver's attention, the display device can turn on the display at a safe timing depending on the driving state of the moving body and the information on nearby obstacles.

In another mode of the display device, the information acquisition unit acquires information on running speed of the moving body, and the display control unit turns on the display of the display unit at a time when the running speed of the moving body is equal to or lower than a predetermined value. According to this mode, the display device can preferably turn on the display at a safe timing.

In still another mode of the display device, the display control unit turns on the display of the display unit at a time when the moving body stops. According to this mode, the display device can preferably turn on the display while ensuring the safety.

In still another mode of the display device, the information acquisition unit acquires distance between the moving body and the obstacle, and the display control unit turns on the display of the display unit at a time when the distance between the moving body and the obstacle is equal to or longer than a predetermined value. According to this mode, the display device can also preferably turn on the display at a safe timing.

In still another mode of the display device, the display device further includes a type acquisition unit configured to acquire a type of a road where the moving body is running, wherein the display control unit changes the predetermined value based on the type of the road. Generally, a safe running speed and a safe distance to an obstacle depend on the type of the road where the moving body is running. Thus, in this mode, the display device can turn on the display at a proper timing in accordance with the type of the road where the moving body is running.

In still another mode of the display device, the display device further includes a type acquisition unit configured to acquire a type of a road where the moving body is running, wherein in a case that the type acquisition unit determines that the moving body is running on a highway, the display control unit turns on the display of the display unit at a time when distance between the moving body and the obstacle is equal to or longer than a predetermined value, and wherein in a case that the type acquisition unit determines that the moving body is running on a road other than a highway, the display control unit turns on the display of the display unit at a time when running speed of the moving body is equal to or lower than a predetermined value. Generally, in the case of running on a highway, since the moving body does not need to wait for a traffic light, there are few chances for the moving body to run at a low speed. In contrast, in the case of running on an ordinary road, the moving body often needs to stop or run at a low speed due to the red signal. Thus, according to this mode, the display device can turn on the display at a proper timing in accordance with the type of the road where the moving body is running.

According to another preferable embodiment of the present invention, there is provided a control method executed by a display device moving together with a moving body and including a display unit configured to display an image, including: an information acquisition process to acquire information on driving of the moving body and/or information on a nearby obstacle; and a display control process to turn off display of the display unit if temperature around or inside the display unit deviates from an allowable operation range, wherein when the temperature shifts from out of the allowable operation range to an allowable return range, the display control process turns on the display of the display unit depending on the information on the driving of the moving body and/or the information on the nearby obstacle acquired by the information acquisition process. By executing the above control method, the display device can turn on the display at a safe timing based on the driving state of the moving body and information on nearby obstacles on the assumption that turning on the display could distract the driver's attention.

According to still another preferable embodiment of the present invention, there is provided a program executed by a display device moving together with a moving body and including a display unit configured to display an image, making the display device function as : an information acquisition unit configured to acquire information on driving of the moving body and/or information on a nearby obstacle; and a display control unit configured to turn off display of the display unit if temperature around or inside the display unit deviates from an allowable operation range, wherein when the temperature shifts from out of the allowable operation range to an allowable return range, the display control unit turns on the display of the display unit depending on the information on the driving of the moving body and/or the information on the nearby obstacle acquired by the information acquisition unit. By executing the program, the display device can turn on the display at a safe timing based on the driving state of the moving body and information on nearby obstacles on the assumption that turning on the display could distract the driver's attention. In a preferred example, the above program is stored in a recording medium.

### EMBODIMENT

Now, a preferred embodiment of the present invention will be described below with reference to the attached drawings.

### [System Configuration]

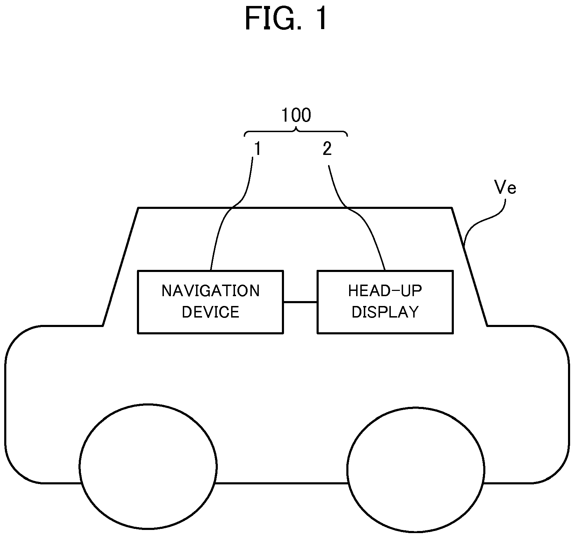

FIG. 1 illustrates an example of the configuration of a display system 100 according to the embodiment. As illustrated in FIG. 1, the display system 100 is mounted on a vehicle Ve and includes a navigation device 1 and a head-up display 2. The display system 100 is mounted on a vehicle. It is noted that all functions of the navigation device 1 may be incorporated into the head-up display 2 instead of the configuration illustrated in FIG. 1.

The navigation device 1 has a guide function of a route from a departure place to a destination . Examples of the navigation device 1 include a stationary navigation device set in a vehicle, a PND (Portable Navigation Device) and a cell phone such as a smart phone.

The head-up display 2 generates an image indicating information for assisting the driving operation such as map information indicating the present position, route guide information and a running speed, and lets the driver visually recognize the image as a virtual image from the position of the eye (eye point) of the driver. The navigation device 1 supplies the head-up display 2 with various kinds of information used for the navigation processing such as the position of the vehicle, the running speed of the vehicle, map information and facility data.

It is noted that the navigation device 1 may be held by a cradle if the navigation device 1 is a cell phone such as a smart phone. In this case, the navigation device 1 may exchange the information with the head-up display 2 via the cradle.

### [Configuration of Navigation Device]

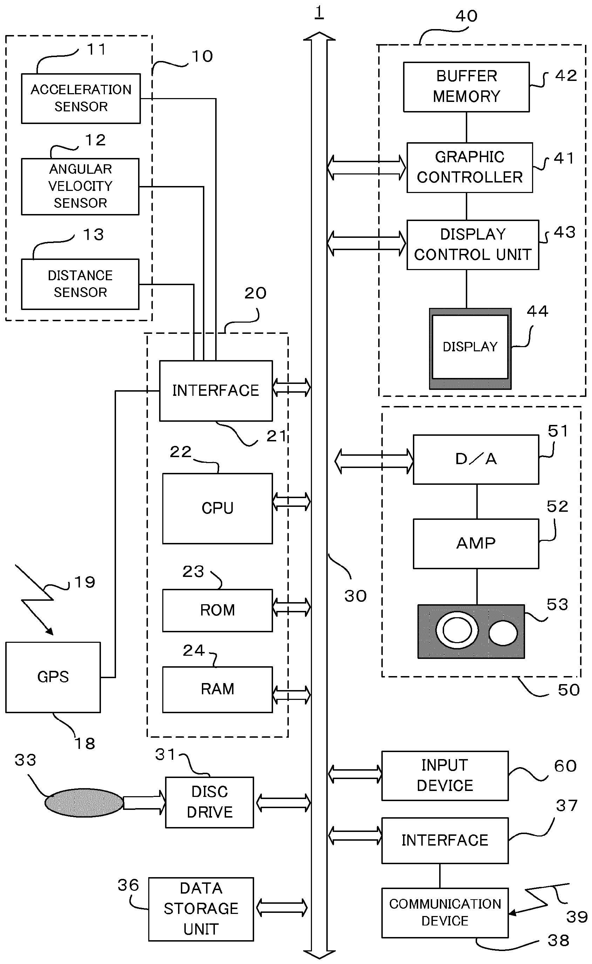

FIG. 2 illustrates a device configuration of the navigation device 1. As shown in FIG. 2, the navigation device 1 includes a stand-alone position measurement device 10, a GPS receiver 18, a system controller 20, a disc drive 31, a data storage unit 36, a communication interface 37, a communication device 38, a display unit 40, a sound output unit 50, and an input device 60.

The stand-alone position measurement device 10 includes an acceleration sensor 11, an angular velocity sensor 12 and a distance sensor 13. The acceleration sensor 11 includes a piezoelectric element, for example, and detects the acceleration degree of the vehicle and outputs the acceleration data. The angular velocity sensor 12 includes a vibration gyroscope, for example, and detects the angular velocity of the vehicle at the time of changing the direction of the vehicle and outputs the angular velocity data and the relative direction data. The distance sensor 13 measures vehicle speed pulses including a pulse signal generated with the wheel rotation of the vehicle.

The GPS receiver 18 receives an electric wave 19 for transmitting downlink data including position measurement data from plural GPS satellites, which is used for detecting the absolute position (hereinafter referred to as "present position ") of the vehicle from longitude and latitude information.

The system controller 20 includes an interface 21, a CPU (Center Processing Unit) 22, a ROM (Read Only Memory) 23 and a RAM (Random Access Memory) 24, and is configured to control the entire navigation device 1.

The interface 21 executes the interface operation with the acceleration sensor 11, the angular velocity sensor 12, the distance sensor 13 and the GPS receiver 18. Then, the interface 21 inputs the vehicle speed pulse, the acceleration data, the relative direction data, the angular velocity data, the GPS measurement data and the absolute direction data into the system controller 20. The CPU 22 controls the entire system controller 20. The ROM 23 includes a non-volatile memory (not shown) in which a control program for controlling the system controller 20 is stored. The RAM 24 readably stores various kinds of data such as route data preset by the user via the input device 60, and supplies a working area to the CPU 22.

The system controller 20, the disc drive 31 such as a CD-ROM drive or a DVD-ROM drive, the data storage unit 36, the communication interface 37, the display unit 40, the sound output unit 50 and the input device 60 are connected to each other via a bus line 30.

Under the control of the system controller 20, the disc drive 31 reads contents data such as sound data and video data from a disc 33 such as a CD and a DVD to output the contents data. The disc drive 31 may be the CD-ROM drive or the DVD-ROM drive, or may be a drive compatible between the CD and the DVD. The data storage unit 36 includes a HDD, for example, and stores various kinds of data used for a navigation process such as map data. The communication device 38 includes an FM tuner or a beacon receiver, a mobile phone and a dedicated communication card for example, and receives road traffic information such as traffic jam information and traffic information and other information delivered from a VICS (Vehicle Information Communication System) center via the communication interface 37. The communication device 38 sends various kinds of information used for the navigation processing such as information on the present position obtained from the GPS receiver 18, information including the vehicle speed pulses acquired from the stand-alone position measurement device 10 and the map data to the head-up display 2.

The display unit 40 displays various kinds of display data on a display screen of a display 44 under the control of the system controller 20. Concretely, the system controller 20 reads the map data from the data storage unit 36, and the display unit 40 displays, on its display screen, the map data read from the data storage unit 36 by the system controller 20. The display unit 40 includes a graphic controller 41 for controlling the entire display unit 40 on the basis of the control data transmitted from the CPU 22 via the bus line 30, a buffer memory 42 having a memory such as a VRAM (Video RAM) for temporarily storing immediately displayable image information, a display control unit 43 for controlling a display 44 such as a liquid crystal and a CRT (Cathode Ray Tube) on the basis of the image data outputted from the graphic controller 41, and the display 44. The display 44 is formed by a liquid crystal display device of the opposite angle 5-10 inches, and is mounted in the vicinity of a front panel of the vehicle.

The sound output unit 50 includes a D/A converter 51 for executing D/A (Digital to Analog) conversion of the sound digital data transmitted from the CD-ROM drive 31, a DVD-ROM 32 or the RAM 24 via the bus line 30 under the control of the system controller 20, an amplifier (AMP) 52 for amplifying a sound analog signal outputted from the D/A converter 51, and a speaker 53 for converting the amplified sound analog signal into the sound and outputting it to the vehicle compartment.

The input device 60 includes keys, switches, buttons, a remote controller and a sound input device, which are used for inputting various kinds of commands and data. The input device 60 is arranged in the vicinity of the display 44 and a front panel of a main body of an on-vehicle electric system loaded on the vehicle . Additionally, in such a case that the display 44 is in a touch panel system, a touch panel provided on the display screen of the display 44 also functions as the input device 60.

### [Configuration of Head-up Display]

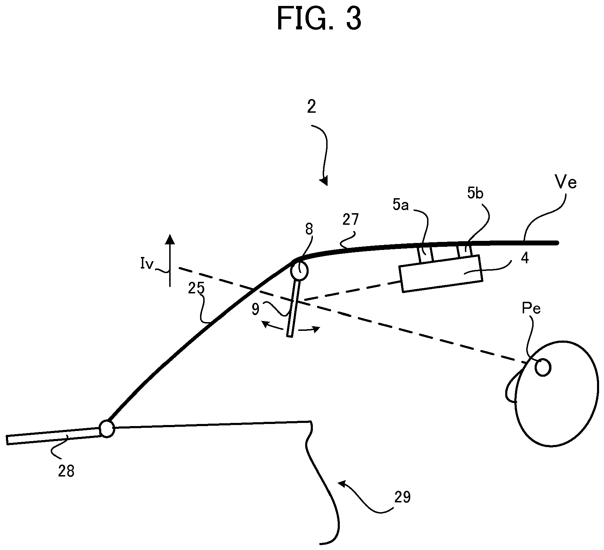

FIG. 3 illustrates the schematic configuration of the head-up display 2. As illustrated in FIG. 3, the head-up display 2 according to the embodiment includes a light source unit 4 and a combiner 9, and is installed in the vehicle Ve equipped with a front window 25, a ceiling board 27, a hood 28 and a dashboard 29.

The light source unit 4 is provided on the ceiling board 27 in the vehicle interior through the support parts 5a and 5b, and emits the light for displaying an image illustrating driver assist information towards the combiner 9. In particular, under the control of the control unit 4, the light source unit 4 generates an original image (real image) of the display image in the light source unit 4, and emits the light for displaying the image towards the combiner 9 thereby to let the driver visually recognize the virtual image "Iv" via the combiner 9. The configuration of the light source unit 4 will be described in the following section "Configuration of Light Source Unit".

The display image emitted from the light source unit 4 is projected onto the combiner 9 and the combiner 9 shows the display image as the virtual image Iv by reflecting the display image towards the eye point "Pe" of the driver. The combiner 9 has a support shaft 8 provided on the ceiling board 27 and rotates on the support shaft 8. The support shaft 8 is provided on the ceiling board 27 near the top edge of the front window 25, i.e., near the position of a sun visor (not shown) for the driver. It is noted that the support shaft 8 may be provided in place of the above-mentioned sun visor.

### [Configuration of Light Source Unit]

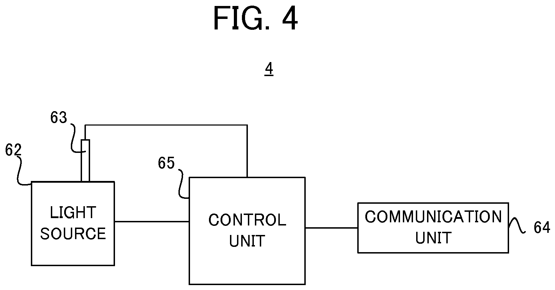

FIG. 4 schematically illustrates the configuration of the light source unit 4. As illustrated in FIG. 4, the light source unit 4 includes a light source 62, a temperature sensor 63, a communication unit 64 and a control unit 65.

The light source 62 includes laser light sources corresponding to red, blue and green, and projects the light onto the combiner 9 under the control of the control unit 65. On the light source 62, there is provided the temperature sensor 63.

The temperature sensor 63 is provided near or adjacent to the light source 62, and detects the temperature of the light source 62. Then, the temperature sensor 63 sends a detection signal indicating the temperature of the light source 62 to the control unit 65.

Under the control of the control unit 65, the communication unit 64 receives various kind of information used for navigation processing from the navigation device 1. In particular, the communication unit 64 receives vehicle speed pulses detected by the distance sensor 13 of the navigation device 1 from the navigation device 1.

The control unit 65 includes a CPU, a ROM which stores control programs and data used by the CPU, and a RAM in which various kinds of data are sequentially read out and stored as a working memory. The control unit 65 controls the entire head-up display 2.

Particularly in the embodiment, the control unit 65 switches the light emission of the light source 62 on and off on the basis of the vehicle speed (referred to as "vehicle speed Vtag") corresponding to vehicle speed pulses obtained via the communication unit 64 and the temperature (referred to as "temperature Ttag") detected by the temperature sensor 63. Thereby, the control unit 65 controls the presence or absence of the virtual image Iv seen via the combiner 9.

Hereinafter, such a state that the light source 62 emits light and thereby the virtual image Iv is displayed through the combiner 9 is simply referred to as "the display is the on-state", and such a state that the virtual image Iv is not displayed is simply referred to as "the display is the off-state".

A pair of the light source 62 and the combiner 9 is an example of "the display unit" according to the present invention. A pair of the communication unit 64 and the control unit 65 is an example of "the information acquisition unit" according to the present invention and the control unit 65 is an example of "the display control unit" according to the present invention.

### [Switching of Display]

Next, a concrete description will be given of a method of switching the display on and off executed by the control unit 65. In summary, the control unit 65 turns off the display if the temperature Ttag has deviated from a predetermined range, and turns on the display if the temperature Ttag has shifted within a predetermined range and the vehicle is at a stop which is a safe state. This leads to ensuring safety even if the driver's attention is distracted due to switching the display from the off-state to the on-state.

The detail description thereof will be given. The control unit 65 turns off the display if the temperature Ttag has deviated from a predetermined range (referred to as "allowable operation range TR"). The allowable operation range TR herein indicates such a range of the temperature Ttag that the light source 62 can work properly. It is determined by experimental trials and stored on the ROM of the control unit 65, for example. Thus, when the temperature Ttag is out of the allowable operation range TR, the control unit 65 turns off the display thereby to properly prevent any breakdown or abnormality of the light source 62.

Thereafter, along with the moderation of the inside temperature of the vehicle through air conditioning and the like, the temperature Ttag shifts from a temperature out of the allowable operation range TR to a temperature within a predetermined range (referred to as "allowable return range TB"). The allowable return range TB herein indicates such a range of the temperature Ttag that the light source 62 works properly even if the display is switched from the off-state to the on-state. It is determined by experimental trials and stored on the ROM of the control unit 65, for example. The allowable return range TB may be the same as the allowable operation range TR or may be different from the allowable operation range TR. In this case, on the basis of the assumption that the driver's attention might be distracted due to the switchover of the display from the off-state to the on-state, the control unit 65 turns on the display only when the running condition is safe regardless of the distraction of the driver's attention. Concretely, the control unit 65 turns on the display only when the vehicle speed Vtag is 0, i.e., the vehicle Ve is at a stop.

This supplemental explanation will be given below. Generally, in the case of display through the head-up display 2, the image is displayed over the front view of the vehicle. Thus, in the case that the display is switched from the off-state to the on-state, the driver's attention could be distracted because the display through the head-up display 2 has suddenly appeared in the view range of the driver. In consideration of the above fact, the control unit 65 turns on the display only when the vehicle is at a halting state that is a safe state regardless of the distraction of the driver's attention. This makes it possible to ensure the safety.

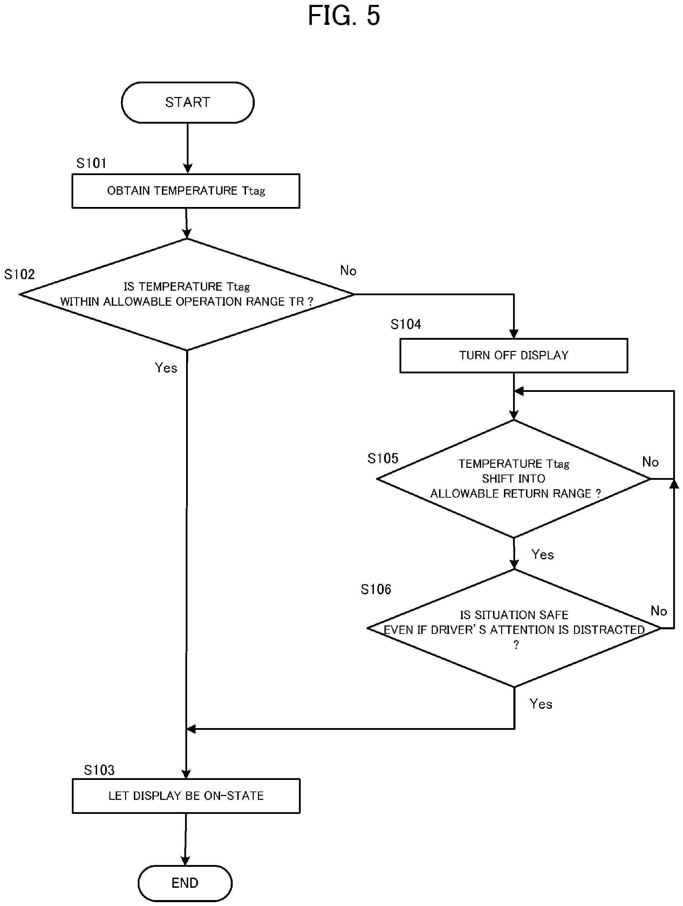

FIG. 5 is a flowchart indicating a procedure of the process of switching the display on and off according to the embodiment. The control unit 65 repeatedly executes the process of the flowchart in FIG. 5 in a predetermined cycle.

First, the control unit 65 obtains the temperature Ttag from the temperature sensor 63 provided on the light source 62 (step S101) . Next, the control unit 65 determines whether or not the temperature Ttag is within the allowable operation range TR (step S102). If the temperature Ttag is within the allowable operation range TR (step S102; Yes), the control unit 65 lets the display be the on-state (step S103). Namely, the control unit 65 controls the light source 62 to emit the light for displaying an image thereby to let the driver see the virtual image Iv.

In contrast, when the temperature Ttag is out of the allowable operation range TR (step S102; No), the control unit 65 determines that the light source unit 4 including the light source 62 cannot work properly at the moment, and turns off the display (step S104).

Next, the control unit 65 determines whether or not the temperature Ttag shifts into the allowable return range TB (step S105) . When the temperature Ttag is out of the allowable return range TB (step S105; No), the control unit 65 continues to monitor the temperature Ttag until the temperature Ttag shifts into the allowable return range TB.

If the temperature Ttag shifts into the allowable return range TB (step S105; Yes), the control unit 65 determines whether or not the situation is safe even if the driver's attention is distracted (step S106). Concretely, the control unit 65 determines whether or not the vehicle speed Vtag indicated by the vehicle speed pulses which the communication unit 64 obtains is 0. At the time of the halting state of the vehicle in which the vehicle speed Vtag is 0, the control unit 65 determines that the situation is safe even if the driver's attention is distracted (step S106; Yes), and lets the display be on-state (step S103) . Accordingly, the control unit 65 can safely switch the display from the off-state to the on-state. In contrast, at the time when the vehicle speed Vtag is not 0, the control unit 65 determines that the situation could be dangerous in the case that the driver's attention is distracted (step S106; No), and keeps the display off. Then, the control unit 65 performs the process at step S105 again. Thereby, the control unit 65 can preferably suppress the occurrence of danger due to the switchover of the display.

As described above, the head-up display 2 according to the embodiment includes the light source 62 and the combiner 9 for displaying an image, the communication unit 64 configured to receive information on the vehicle speed Vtag from the navigation device 1, and the control unit 65 configured to perform the control of turning off the display if the temperature Ttag deviates from the allowable operation range TR. When the temperature Ttag has shifted from out of the allowable operation range TR into the allowable return range TB, the control unit 65 controls the light source 62 to turn on the display based on the vehicle speed Vtag. Thereby, the head-up display 2 can turn on the display at a safe timing on the assumption that the driver's attention could be distracted by turning on the display.

### [Modification]

Hereinafter, preferred modifications of the above-mentioned embodiment will be described below. Each modification mentioned later can be applied to the above-mentioned embodiment in combination.

### (First Modification)

According to FIG. 4, the temperature sensor 63 is provided near or adjacent to the light source 62 and detects the temperature of the light source 62. However, the configuration to which the present invention can be applied is not limited to the configuration.

For example, instead of detecting the temperature of the light source 62, the temperature sensor 63 may detect the temperature of the least heat resistant part in the light source unit 4 except the light source 62. Even in this case, the control unit 65 turns the display off at the time when the temperature Ttag detected by the temperature sensor 63 is out of the allowable operation range TR. The allowable operation range TR in this case is set based on experimental trials to such a range of temperature that the above-mentioned least heat resistant part works properly, for example. Similarly, the allowable return range TB is set based on experimental trials to such a range of temperature that the above-mentioned least heat resistant part works properly at the time of switching the display from the off-state to the on-state.

In another example, the temperature sensor 63 may be provided on the surface of the housing of the light source unit 4 or at any position inside the vehicle to detect temperature around the light source unit 4 or inside the vehicle. In this case, the above-mentioned range of temperature that the light source unit 4 properly works is determined by experimental trials in advance, and the control unit 65 sets the range to the allowable operation range TR. Similarly, the allowable return range TB is set by experimental trials to such a range of the temperature that the light source unit 4 properly works at the time of switching the display from the off-state to the on-state.

### (Second Modification)

According to FIG.3, the head-up display 2 includes the combiner 9, and lets the driver see the virtual image Iv based on the light emitted from the light source unit 4 and reflected by the combiner 9. However, the configuration to which the present invention can be applied is not limited to the configuration. Instead, without the combiner 9, the head-up display 2 may let the driver see the virtual image Iv based on the light emitted from the light source unit 4 and reflected by the front window 25.

In addition, the mounting position of the light source unit 4 is not limited to the ceiling board 27. Instead, the light source unit 4 may be provided inside the dashboard 29. In this case, the dashboard 29 has an opening for letting the light pass into the combiner 9 or the front window 25.

### (Third Modification)

The control unit 65 recognizes the vehicle speed Vtag based on information on the vehicle speed pulses detected by the distance sensor 13 of the navigation device 1. Instead, the control unit 65 may recognize the vehicle speed Vtag by receiving the information on the vehicle speed pulses from a control unit (ECU: Electronic Control Unit) in the vehicle Ve. The control unit 65 may also calculate the vehicle speed Vtag based on the transition of the present positional information outputted by the GPS receiver 18 instead of the vehicle speed pulses.

### (Fourth Modification)

According to step S106 in FIG. 5, in the case that the vehicle is at a stop, the control unit 65 determines whether or not the situation is safe even if the driver's attention is distracted, and switches the display from the off-state to the on-state. However, the method to which the present invention can be applied is not limited to the method. Hereinafter, a description will be given of other examples of the determination method.

According to the first example, the control unit 65 determines whether or not the situation is safe even if the driver's attention is distracted at the time when the vehicle speed Vtag is equal to or lower than a predetermined velocity (referred to as "threshold Vth"). In this case, for example, the threshold Vth is set by experimental trials to such a velocity of the vehicle that the situation is considered to be less dangerous even if the driver's attention is distracted. Even in this case, the control unit 65 can safely switch the display from the off-state to the on-state.

According to the second example, the control unit 65 may measure the distance (referred to as "obstacle distance Ltag") to an obstacle (e.g., a vehicle in front) that exists in a predetermined direction, and determine that the situation is safe even if the driver's attention is distracted at the time when the measured obstacle distance Ltag is equal to or longer than a predetermined distance (referred to as "threshold Lth") . In this case, for example, the threshold Vth is set by experimental trials to such an obstacle distance Ltag that the situation is considered to be less dangerous even if the driver's attention is distracted.

In this case, the control unit 65 may recognize the obstacle distance Ltag to the obstacle existing in a predetermined direction by receiving a signal from infrared sensor (s) and/or radar (s) which are provided on the vehicle in order to detect any obstacle in the predetermined direction. In another example, the control unit 65 may recognize the obstacle distance Ltag by recognizing the three dimensional shape of an obstacle existing in the predetermined direction based on images generated by plural cameras. In this case, the control unit 65 is electrically connected to the cameras which are directed from the vehicle Ve to each predetermined direction to define a predetermined convergence angle.

In the third example, at step S106 in FIG. 5, the control unit 65 may determine whether or not the situation is safe even if the driver's attention is distracted on the basis of both the vehicle speed Vtag and the obstacle distance Ltag. For example, if the vehicle speed Vtag is equal to or lower than the threshold Vth and/or the obstacle distance Ltag is equal to or longer than the threshold Lth, the control unit 65 determines that the situation is safe even if the driver's attention is distracted. In another example, the control unit 65 may set the threshold Lth with reference to a predetermined map or an equation based on the vehicle speed Vtag. Then, if the obstacle distance Ltag is equal to or longer than the threshold Lth, the control unit 65 determines that the situation is safe even if the driver's attention is distracted. In this case, the control unit 65 stores a map or an equation indicating a proper threshold Lth for each vehicle speed Vtag on the ROM in advance. Similarly, the control unit 65 may set the threshold Vth with reference to a predetermined map or an equation based on the obstacle distance Ltag. Then, if the vehicle speed Vtag is equal to or lower than the threshold Vth, the control unit 65 determines that the situation is safe even if the driver's attention is distracted. In this case, the control unit 65 stores a map or an equation indicating a proper threshold Vth for each obstacle distance Ltag on the ROM in advance.

### (Fifth Modification)

The control unit 65 may recognize the type of the road where the vehicle is running and change the condition used at step S106 in FIG. 5 for determining whether or not the situation is safe even if the driver's attention is distracted in accordance with the recognized type of the road. For example, in this case, the control unit 65 recognizes the type of the road where the vehicle is running on the basis of the present positional information generated by the GPS receiver 18 and the map data stored on the data storage unit 36 of the navigation device 1 or the ROM of the control unit 65.

Here, a description will be given of concrete examples of the determination method at step S106 in FIG. 5 in accordance with the recognized road type.

For example, in a case that the recognized road type is an ordinary road, the control unit 65 determines that the situation is safe even if the driver's attention is distracted at the time when the vehicle speed Vtag is 0 or not higher than the threshold Vth according to the fourth modification. In contrast, in a case that the recognized road type is a highway, the control unit 65 determines that the situation is safe even if the driver's attention is distracted at the time when the obstacle distance Ltag according to the fourth modification concerning the vehicle in front is equal to or longer than the threshold Lth.

Additional explanation of the above-mentioned example will be described below. Generally, since a highway does not have any traffic signal in principle, there are fewer chances for vehicles on a highway than vehicles on an ordinary road to stop or run in a low-speed state. Even in this case, by means of the above-mentioned determination method, the control unit 65 can preferably switch the display from the off-state to the on-state at the time of running on a highway.

In another example, the control unit 65 may change the threshold Vth and/or the threshold Lth in accordance with the recognized road type. For example, regarding the determination at step S106 in FIG. 5 based on the vehicle speed Vtag, in the case that the road type is a highway, the control unit 65 sets the threshold Vth to a value higher than the threshold Vth set in the case that the road type is an ordinary road. Thereby, the control unit 65 preferably increases chances to switch the display from the off-state to the on-state even when the vehicle is running on a highway. In still another example, regarding the determination at step S106 in FIG. 5 based on the obstacle distance Ltag, in the case that the road type is a highway, the control unit 65 sets the threshold Lth to a value higher than the threshold Lth set in the case that the road type is an ordinary road. In this case, on the assumption that the vehicle Ve moves at high speed on a highway, the control unit 65 switches the display from the off-state to the on-state only when the obstacle distance Ltag is sufficiently longer than the obstacle distance Ltag used in the case of an ordinary road. Thereby, the control unit 65 ensures the safety.

### (Sixth Modification)

On the basis of weather information, the control unit 65 may change the condition at step S106 in FIG. 5 for determining whether or not the situation is safe even if the driver's attention is distracted. For example, the control unit 65 determines that driving in rainy weather is more dangerous than driving in fair weather or in cloudy weather if the driver's attention is distracted. Thus, in the case of rainy weather, the control unit 65 tightens the conditions at step S106 in FIG. 5 for determining that the situation is safe even if the driver's attention is distracted.

For example, in the case of a rainy weather, the control unit 65 determines that the situation is safe even if the driver's attention is distracted only when the vehicle is at a stop. In contrast, in the case of a fair weather, the control unit 65 sets the threshold Vth mentioned in fourth modification to a value higher than 0, and determines that the situation is safe even if the driver's attention is distracted provided that the vehicle speed Vtag is equal to or lower than the threshold Vth. In this case, the control unit 65 may recognize the weather information based on a user input or may obtain the weather information by communicating with a server which provides weather information over the Internet.

### (Seventh Modification)

The display system 100 includes the head-up display 2 and switches the display through the head-up display 2 between the on-state and the off-state. However, the configuration to which the present invention can be applied is not limited to the configuration. Instead, for example, the display system 100 may not have the head-up display 2, and switch the display of the display unit 40 between the on-state and the off-state.

In this case, the navigation device 1 includes a temperature sensor for detecting the temperature of the display unit 40, and the system controller 20 switches the display through the display unit 40 between the on-state and the off-state by executing the flowchart indicated by FIG. 5 based on the temperature detected by the temperature sensor. Even in this way, on the assumption that the driver's attention could be distracted because of turning on the display, the navigation device 1 can properly turn on the display at a safe timing.

### BRIEF DESCRIPTION OF REFERENCE NUMBERS

- 1: Navigation device
- 2: Head-up display
- 4: Light source unit
- 9: Combiner
- 25: Front window
- 28: Hood
- 29: Dashboard
- 100: Display system

## Claims

1. A display device configured to move together with a moving body comprising:
a display unit (62, 9) configured to display an image;
an information acquisition unit (64, 65) configured to acquire information on driving of the moving body and/or information on a nearby obstacle; and
a display control unit (65) configured to turn off display of the display unit (62, 9) if temperature around or inside the display unit (62, 9) deviates from an allowable operation range,
**characterized in that**, when the temperature shifts from out of the allowable operation range to an allowable return range, the display control unit (65) is configured to turn on the display of the display unit (62, 9) depending on the information on the driving of the moving body and/or the information on the nearby obstacle acquired by the information acquisition unit (64, 65).

2. The display device according to claim 1,
wherein the display unit (62, 9) displays the image over scenery seen in front of the moving body.

3. The display device according to claim 1 or 2,
wherein the information acquisition unit (64, 65) acquires information on running speed of the moving body, and
wherein the display control unit (65) turns on the display of the display unit (62, 9) at a time when the running speed of the moving body is equal to or lower than a predetermined value.

4. The display device according to claim 3,
wherein the display control unit (65) turns on the display of the display unit (62, 9) at a time when the moving body stops.

5. The display device according to claim 1 or 2,
wherein the information acquisition unit (64, 65) acquires distance between the moving body and the obstacle, and
wherein the display control unit (65) turns on the display of the display unit (62, 9) at a time when the distance between the moving body and the obstacle is equal to or longer than a predetermined value.

6. The display device according to claim 3, further comprising
a type acquisition unit configured to acquire a type of a road where the moving body is running,
wherein the display control unit (65) changes the predetermined value based on the type of the road.

7. The display device according to claim 1 or 2, further comprising
a type acquisition unit configured to acquire a type of a road where the moving body is running,
wherein in a case that the type acquisition unit determines that the moving body is running on a highway, the display control unit (65) turns on the display of the display unit (62, 9) at a time when distance between the moving body and the obstacle is equal to or longer than a predetermined value, and
wherein in a case that the type acquisition unit determines that the moving body is running on a road other than a highway, the display control unit (65) turns on the display of the display unit (62, 9) at a time when running speed of the moving body is equal to or lower than a predetermined value.

8. A control method executed by a display device moving together with a moving body and including a display unit (62, 9) configured to display an image, comprising:
an information acquisition process to acquire information on driving of the moving body and/or information on a nearby obstacle; and
a display control process to turn off display of the display unit if temperature around or inside the display unit (62, 9) deviates from an allowable operation range,
**characterized in that**, when the temperature shifts from out of the allowable operation range to an allowable return range, the display control process turns on the display of the display unit (62, 9) depending on the information on the driving of the moving body and/or the information on the nearby obstacle acquired by the information acquisition process.

9. A program executed by a display device moving together with a moving body and including a display unit (62, 9) configured to display an image, making the display device function as:
an information acquisition unit(64, 65) configured to acquire information on driving of the moving body and/or information on a nearby obstacle; and
a display control unit (65) configured to turn off display of the display unit (62, 9) if temperature around or inside the display unit (62, 9) deviates from an allowable operation range,
**characterized in that**, when the temperature shifts from out of the allowable operation range to an allowable return range, the display control unit (65) turns on the display of the display unit (62, 9) depending on the information on the driving of the moving body and/or the information on the nearby obstacle acquired by the information acquisition unit(64, 65).

10. A storage medium storing the program according to claim 9.

## Patentansprüche

1. Anzeigevorrichtung, die eingerichtet ist, um sich gemeinsam mit einem sich bewegenden Körper zu bewegen, aufweisend:
eine Anzeigeeinheit (62, 9), die eingerichtet ist, ein Bild anzuzeigen;
eine Informationserfassungseinheit (64, 65), die eingerichtet ist, um Informationen über einen Antrieb des sich bewegenden Körper und/oder Informationen über ein nahegelegenes Hindernis zu erfassen; und
eine Anzeige-Steuereinheit (65), die eingerichtet ist, um eine Anzeige der Anzeigeeinheit (62, 9) auszuschalten, wenn die Temperatur außerhalb oder innerhalb der Anzeigeeinheit (62, 9) von einem zulässigen Betriebsbereich abweicht,
**dadurch gekennzeichnet, dass**
die Anzeige-Steuereinheit (65) eingerichtet ist, um, wenn sich die Temperatur von außerhalb des zulässigen Betriebsbereiches in einen zulässigen Rückgabebereich ändert, die Anzeige der Anzeigeeinheit (62, 9) in Abhängigkeit der von der Informationserfassungseinheit (64, 65) erfassten Informationen über den Antrieb des sich bewegenden Körpers und/oder Informationen über ein nahegelegenes Hindernis anzuschalten.

2. Anzeigevorrichtung nach Anspruch 1,
wobei die Anzeigeeinheit (62, 9) das Bild einer vor dem sich bewegenden Körper gesehenen Szene anzeigt.

3. Anzeigevorrichtung nach Anspruch 1 oder 2,
wobei die Informationserfassungseinheit (64, 65) Informationen über die Betriebsgeschwindigkeit dem sich bewegenden Körper erfasst, und
wobei die Anzeige-Steuereinheit (65) die Anzeige der Anzeigeeinheit (62, 9) zu einer Zeit anschaltet, wenn die Betriebsgeschwindigkeit dem sich bewegenden Körper gleich oder kleiner als ein vorbestimmter Wert ist.

4. Anzeigevorrichtung nach Anspruch 3,
wobei die Anzeige-Steuereinheit (65) die Anzeige der Anzeigeeinheit (62, 9) zu einer Zeit anschaltet, wenn der sich bewegende Körper anhält.

5. Anzeigevorrichtung nach Anspruch 1 oder 2,
wobei die Informationserfassungseinheit (64, 65) einen Abstand zwischen dem sich bewegenden Körper und dem Hindernis erfasst, und
wobei die Anzeige-Steuereinheit (65) die Anzeige der Anzeigeeinheit (62, 9) zu einer Zeit anschaltet, wenn der Abstand zwischen dem sich bewegenden Körper und dem Hindernis gleich oder größer als ein vorbestimmter Wert ist.

6. Anzeigevorrichtung nach Anspruch 3, ferner aufweisend:
eine Art-Erfassungseinheit, die eingerichtet ist, eine Art einer Straße, auf der der sich bewegende Körper betrieben wird, zu erfassen;
wobei die Anzeige-Steuereinheit (65) den vorbestimmten Wert basierend auf der Art der Straße ändert.

7. Anzeigevorrichtung nach Anspruch 1 oder 2, ferner aufweisend:
eine Art-Erfassungseinheit, die eingerichtet ist, eine Art einer Straße, auf der der sich bewegende Körper betrieben wird, zu erfassen;
wobei in einem Fall, dass die Art-Erfassungseinheit ermittelt, dass der sich bewegende Körper auf einem Highway betrieben wird, die Anzeige-Steuereinheit (65) die Anzeige der Anzeigeeinheit (62, 9) zu einer Zeit anschaltet, wenn der Abstand zwischen dem sich bewegenden Körper und dem Hindernis gleich oder größer als ein vorbestimmter Wert ist; und
wobei in einem Fall, dass die Art-Erfassungseinheit ermittelt, dass der sich bewegende Körper auf einer anderen Straße als einem Highway betrieben wird, die Anzeige-Steuereinheit (65) die Anzeige der Anzeigeeinheit (62, 9) zu einer Zeit anschaltet, wenn die Betriebsgeschwindigkeit des sich bewegenden Körpers gleich oder kleiner als ein vorbestimmter Wert ist.

8. Steuerverfahren, ausgeführt von einer Anzeigevorrichtung, die sich gemeinsam mit einem sich bewegenden Körper bewegt und die eine Anzeigeeinheit (62, 9), die eingerichtet ist, ein Bild anzuzeigen, aufweist, aufweisend:
einen Informationserfassungsvorgang, um Informationen über einen Antrieb des sich bewegenden Körpers und/oder Informationen über ein nahegelegenes Hindernis zu erfassen; und
einen Anzeige-Steuervorgang, um einen Bildschirm der Anzeigeeinheit auszuschalten, wenn die Temperatur außerhalb oder innerhalb der Anzeigeeinheit (62, 9) von einem zulässigen Betriebsbereich abweicht,
**dadurch gekennzeichnet, dass**
wenn sich die Temperatur von außerhalb des zulässigen Betriebsbereiches in einen zulässigen Rückgabebereich ändert, der Anzeige-Steuervorgang den Bildschirm der Anzeigeeinheit (62, 9) in Abhängigkeit der von dem Informationserfassungsvorgang erfassten Informationen über den Antrieb des sich bewegenden Körpers und/oder Informationen über ein nahegelegenes Hindernis anschaltet.

9. Programm, ausgeführt von einer Anzeigevorrichtung, die sich gemeinsam mit einem sich bewegenden Körper bewegt und die eine Anzeigeeinheit (62, 9), die eingerichtet ist, ein Bild anzuzeigen, aufweist, das die Anzeigevorrichtung veranlasst, zu funktionieren als:
eine Informationserfassungseinheit (64, 65), die eingerichtet ist, um Informationen über einen Antrieb des sich bewegenden Körpers und/oder Informationen über ein nahegelegenes Hindernis zu erfassen; und
eine Anzeige-Steuereinheit (65), die eingerichtet ist, um einen Bildschirm der Anzeigeeinheit (62, 9) auszuschalten, wenn die Temperatur außerhalb oder innerhalb der Anzeigeeinheit (62, 9) von einem zulässigen Betriebsbereich abweicht,
**dadurch gekennzeichnet, dass**
die Anzeige-Steuereinheit (65) eingerichtet ist, um, wenn sich die Temperatur von außerhalb des zulässigen Betriebsbereiches in einen zulässigen Rückgabebereich ändert, den Bildschirm der Anzeigeeinheit (62, 9) in Abhängigkeit der von der Informationserfassungseinheit (64, 65) erfassten Informationen über den Antrieb des sich bewegenden Körpers und/oder Informationen über ein nahegelegenes Hindernis anzuschalten.

10. Speichermedium, das das Programm gemäß Anspruch 9 speichert.

## Revendications

1. Dispositif d'affichage conçu pour se déplacer conjointement avec un corps mobile, comprenant :
une unité d'affichage (62, 9) conçue pour afficher une image ;
une unité d'acquisition d'informations (64, 65) conçue pour acquérir des informations sur l'entraînement du corps mobile et/ou des informations sur un obstacle à proximité ; et
une unité de commande d'affichage (65) conçue pour désactiver l'affichage de l'unité d'affichage (62, 9) si la température autour ou à l'intérieur de l'unité d'affichage (62, 9) dévie d'une plage de fonctionnement admissible,
**caractérisé en ce que**
lorsque la température dérive hors de la plage de fonctionnement admissible vers une plage de retour admissible, l'unité de commande d'affichage (65) est conçue pour activer l'affichage de l'unité d'affichage (62, 9) en fonction des informations sur l'entraînement du corps mobile et/ou des informations sur l'obstacle à proximité acquises par l'unité d'acquisition d'informations (64, 65).

2. Dispositif d'affichage selon la revendication 1,
dans lequel l'unité d'affichage (62, 9) affiche l'image sur un décor vu à l'avant du corps mobile.

3. Dispositif d'affichage selon la revendication 1 ou 2,
dans lequel l'unité d'acquisition d'informations (64, 65) acquiert des informations sur la vitesse de déplacement du corps mobile et
dans lequel l'unité de commande d'affichage (65) active l'affichage de l'unité d'affichage (62, 9) à un moment où la vitesse de déplacement du corps mobile est inférieure ou égale à une valeur prédéterminée.

4. Dispositif d'affichage selon la revendication 3,
dans lequel l'unité de commande d'affichage (65) active l'affichage de l'unité d'affichage (62, 9) à un moment où le corps mobile s'arrête.

5. Dispositif d'affichage selon la revendication 1 ou 2,
dans lequel l'unité d'acquisition d'informations (64, 65) acquiert une distance entre le corps mobile et l'obstacle, et
dans lequel l'unité de commande d'affichage (65) active l'affichage de l'unité d'affichage (62, 9) à un moment où la distance entre le corps mobile et l'obstacle est supérieure ou égale à une valeur prédéterminée.

6. Dispositif d'affichage selon la revendication 3, comprenant en outre
une unité d'acquisition de type conçue pour acquérir un type de route sur laquelle le corps mobile se déplace,
l'unité de commande d'affichage (65) modifiant la valeur prédéterminée sur la base du type de route.

7. Dispositif d'affichage selon la revendication 1 ou 2, comprenant en outre
une unité d'acquisition de type conçue pour acquérir un type de route sur laquelle le corps mobile se déplace,
dans le cas où l'unité d'acquisition de type détermine que le corps mobile se déplace sur une autoroute, l'unité de commande d'affichage (65) activant l'affichage de l'unité d'affichage (62, 9) à un moment où la distance entre le corps mobile et l'obstacle est supérieure ou égale à une valeur prédéterminée et
dans le cas où l'unité d'acquisition de type détermine que le corps mobile se déplace sur une route différente d'une autoroute, l'unité de commande d'affichage (65) activant l'affichage de l'unité d'affichage (62, 9) à un moment où la vitesse de déplacement du corps mobile est inférieure ou égale à une valeur prédéterminée.

8. Procédé de commande exécuté par un dispositif d'affichage se déplaçant conjointement avec un corps mobile comprenant une unité d'affichage (62, 9) conçue pour afficher une image, comprenant :
un processus d'acquisition d'informations pour acquérir des informations sur l'entraînement du corps mobile et/ou des informations sur un obstacle à proximité ; et
un processus de commande d'affichage pour désactiver l'affichage de l'unité d'affichage si la température autour ou à l'intérieur de l'unité d'affichage (62, 9) dévie d'une plage de fonctionnement admissible,
**caractérisé en ce que**
lorsque la température dérive hors de la plage de fonctionnement admissible vers une plage de retour admissible, le processus de commande d'affichage active l'affichage de l'unité d'affichage (62, 9) en fonction des informations sur l'entraînement du corps mobile et/ou des informations sur l'obstacle à proximité acquises par le processus d'acquisition d'informations.

9. Programme exécuté par un dispositif d'affichage se déplaçant conjointement avec un corps mobile et comprenant une unité d'affichage (62, 9) conçue pour afficher une image, faisant en sorte que le dispositif d'affichage fonctionne comme :
une unité d'acquisition d'informations (64, 65) conçue pour acquérir des informations sur l'entraînement du corps mobile et/ou des informations sur un obstacle à proximité ; et
une unité de commande d'affichage (65) conçue pour désactiver l'affichage de l'unité d'affichage (62, 9) si la température autour ou à l'intérieur de l'unité d'affichage (62, 9) dévie d'une plage de fonctionnement admissible,
**caractérisé en ce que**
lorsque la température dérive hors de la plage de fonctionnement admissible vers une plage de retour admissible, l'unité de commande d'affichage (65) active l'affichage de l'unité d'affichage (62, 9) en fonction des informations sur l'entraînement du corps mobile et/ou des informations sur l'obstacle à proximité acquises par l'unité d'acquisition d'informations (64, 65).

10. Support de stockage stockant le programme selon la revendication 9.
